# EUROPEAN PATENT SPECIFICATION

(11) **EP 0 243 097 B1**
(45) Date of publication and mention of the grant of the patent: **04.08.1993**
(21) Application number: 87303361.7
(22) Date of filing: 15.04.1987
(51) Int. Cl.: G01K 7/12, G01K 7/02

(54) **Improvements in thermocouples**
Thermoelemente
Thermocouples

(30) Priority: 24.04.1986 US 855807
(43) Date of publication of application: 28.10.1987
(73) Proprietor: Falk, Richard A., Fort Lauderdale Florida 33301 (US)
(72) Inventor: Falk, Richard A., Fort Lauderdale Florida 33301 (US)
(74) Representative: Adams, William Gordon

(56) References cited:
- EP-A- 0 115 214
- US-A- 1 344 462
- US-A- 4 221 923

## Description

This invention relates to thermocouples and connectors therefor.

Various immersion thermocouples have been developed for repetitive measurements of molten metal baths during manufacture of steel or other metals. With repetitive thermocouples which may be immersed repeatedly within a short interval the temperature of the expendable thermocouple assembly electrical connector between the expendable thermocouple and the immersion thermocouple can rise and the temperature can cause an EMF to be generated at the cold junction of the thermocouple wires and the electrical leads which connect the thermocouple to a recording unit. The EMF generated can provide non-representative test data or temperature data.

The thermocouple lance for immersion in a molten bath according to the invention comprises a housing, a thermocouple holder mounted in the housing; a tubular socket mounted within the and defining an interior chamber; a first thermocouple having a hot junction and a cold junction with first and second electric leads being connected at the cold junction and leading away therefrom, sadi first thermocouple being supported in the holder; block means for supporting the first thermocouple within the housing, the first thermocouple hot junction protruding from the housing; the socket supported in the block means for containing the first thermocouple cold junction and the first and second electrical leads leading therefrom; the first thermocouple cold junction being located in a wall of the tubular socket; a first electrical connector inserted into the socket means and being in electrical conduction with the first lead leading from the first thermocouple cold junction; a second electrical connector located inside the socket and inserted into the first electrical connector and being in electrical connection with the second lead leading from the first thermocouple cold junction, the first electrical connector having a tip that extends proximate the first thermocouple cold junction; a second thermocouple having a hot junction adapted to measure the ambient air in the socket interior chamber installed in the second electrical connector tip for sensing the temperature of the first thermocouple cold junction; and circuit means connected to the second thermocouple and including signal means for providing an identifiable signal when the second thermocouple senses a predetermined temperature proximate the first thermocouple cold junction.

Further objects, advantages and features of the invention will become apparent from the disclosure.
Figure 1 shows a sectional view of an electrical connector embodying a temperature sensor in accordance with the invention;
Figure 2 shows a fragmentary sectional view of the electrical connector of Fig. 1 embodied in a temperature measuring immersion lance which is connected to a circuit which provides an identifiable signal.

Although the disclosure hereof is detailed and exact to enable those skilled in the art to practice the invention, the physical embodiments herein disclosed merely exemplify the invention which may be embodied in other specific structure. The scope of the invention is defined in the claims appended hereto.

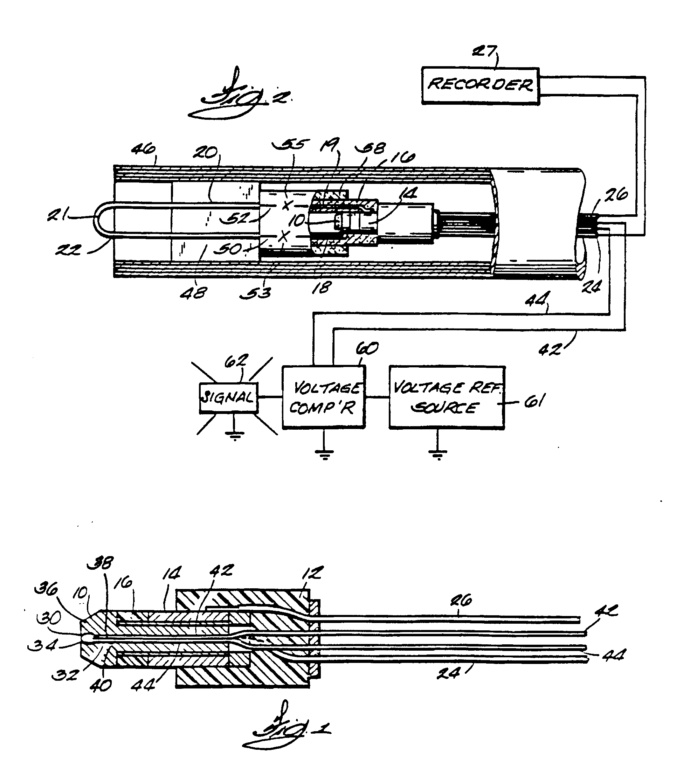

In the drawings Fig. 1 shows an electrical connector or plug 10 which projects from a non-conductive plug housing 12. The electrical connector or plug 10 is insulated from the other electrical connector 14 by means of a ring 16 of electrically insulating material. These two electrical connectors 10 and 14 are adapted to electrically connect with the leads 18 and 19 for a thermocouple unit 20 housed in a U-shaped fuse quartz thermocouple tube 22. The electrical connectors 10 and 14 are electrically connected to leads 24 and 26 which are remotely connected to a temperature recording unit of known construction such as a digital recorder 27 or computer.

In accordance with the invention the electrical plug is provided with a heat sensing means 30. In the disclosed construction the heat sensing means comprises a thermocouple element 32 which can have a low temperature junction such as copper-constantan, iron-constantan, chromel-alumel or others at 34 in the tip 36 of the plug with the thermocouple wires insulated from the plug components by refractory cement or the like. The platinum and platinum-rhodium wires 38 and 40 are electrically connected to leads 42 and 44. The temperature sensor 30 sends a voltage over wires 42 and 44 to a voltage comparator/driver 60. This voltage level is compared to a reference voltage supplied by the adjustable voltage reference source 61. If the voltage level supplied by the temperature sensor 30 is greater than the reference voltage supplied by the voltage reference source, the voltage comparator/driver activates the signalling device 62.

In use when the indicator indicates that a predetermined temperature has been sensed in said plug, the operator will forego using the thermocouple until the unit cools and the light goes off or an audible signal stops.

Referring to Fig. 2 the immersion thermocouple includes a holder or paperboard housing 46 with a mount or block 48 which supports and positively positions the fused quartz thermocouple tube 22. The platinum and platinum-rhodium leads 50 and 52 from the thermocouple are connected to leads 18 and 19 in the socket 58. The leads 18 and 19 contact the electrical connectors 10 and 14 to provide an electrical connection with the leads 24 and 26. The connections 53 and 55 form the cold junction for the thermocouple element 21 in tube 22. The temperature sensor 30 is desirably in close proximity to the cold junction 53 and 55 to sense the temperature at the cold junction.

## Claims

1. A thermocouple lance for immersion in a molten bath comprising:
(a) a housing (46), a thermocouple holder (22) mounted in the housing;
(b) a tubular socket (58) mounted within the housing and defining an interior chamber;
(c) a first thermocouple (21) having a hot junction (34) and a cold junction (53,55) with first and second electric leads (19,18) being connected at the cold junction and leading away therefrom, said first thermocouple being supported in the holder;
(d) block means (48) for supporting the first thermocouple within the housing, the first thermocouple hot junction protruding from the housing;
(e) the socket (58) supported in the block means for containing the first thermocouple cold junction (53,55) and the first and second electrical leads (19,18) leading therefrom; the first thermocouple cold junction being located in a wall of the tubular socket;
(f) a first electrical connector (14) inserted into the socket means and being in electrical conduction with the first lead (19) leading from the first thermocouple cold junction (55);
(g) a second electrical connector (10) located inside the socket and inserted into the first electrical connector (14) and being in electrical connection with the second lead (18) leading from the first thermocouple cold junction (53), the first electrical connector having a tip (36) that extends proximate the first thermocouple cold junction (53,55);
(h) a second thermocouple (30) having a hot junction adapted to measure the ambient air in the socket interior chamber installed in the second electrical connector tip (36) for sensing the temperature of the first thermocouple cold junction (53,55); and
(i) circuit means (60,62) connected to the second thermocouple and including signal means (62) for providing an identifiable signal when the second thermocouple senses a predetermined temperature proximate the first thermocouple cold junction.

2. A lance as claimed in claim 1 wherein the first electrical connector (14) surrounds the second electrical connector (10) and is separated therefrom by a ring (16) of insulating material the first connector (14) being held in a non-conductive further housing (12) with electrically conductive leads (24,26) extending through the further housing (12) from the connectors (10,14).

3. A lance as claimed in claim 1 or 2 wherein a recorder (27) is connected to the first thermcouple (21), the recorder recording temperature measured by the first thermocouple (21).

## Patentansprüche

1. Thermoelement-Sonde zum Eintauchen in ein Schmelzbad, enthaltend:
(a) ein Gehäuse (46), einen in dem Gehäuse montierten Thermoelement-Halter (22);
(b) einen rohrförmigen Sockel(58), der in dem Gehäuse montiert ist und eine innere Kammer bildet;
(c) ein erstes Thermoelement (21) mit einem heißen Verbindungspunkt (34) und einem kalten Verbindungspunkt (53, 55) und mit ersten und zweiten elektrischen Leitern (19, 18), die an den kalten Verbindungspunkt angeschlossen sind und von diesem wegführen, wobei das erste Thermoelement in dem Halter gelagert ist;
(d) Befestigungsmittel (48) zur Halterung des ersten Thermoelementes in dem Gehäuse, wobei der heiße Verbindungspunkt des ersten Thermoelementes aus dem Gehäuse hervorspringt;
(e) den in den Befestigungsmitteln gehalterten Sockel (58) zur Aufnahme des kalten Verbindungspunktes (53, 55) des ersten Thermoelementes und der davon ausgehenden ersten und zweiten elektrischen Leiter (19, 18), wobei der kalte Verbindungspunkt des ersten Thermoelementes in einer Wand des rohrförmigen Sockels gelagert ist;
(f) einen ersten elektrischen Steckkontakt (14), der in die Sockelmittel eingeführt ist und in elektrischem Kontakt mit dem von dem kalten Verbindungspunkt (55) des ersten Thermoelementes ausgehenden ersten Leiter (19) steht;
(g) einen zweiten elektrischen Steckkontakt (10), der in dem Sockel gelagert, in den ersten elektrischen Steckkontakt (14) eingesetzt ist und in elektrischem Kontakt mit dem von dem kalten Verbindungspunkt (53) des ersten Thermoelementes ausgehenden zweiten Leiter (18) steht, wobei der erste elektrische Steckkontakt eine Spitze (36) aufweist, die sich in der Nähe des kalten Verbindungspunktes (53, 55) des ersten Thermoelementes erstreckt;
(h) ein zweites Thermoelement (30), das einen heißen Verbindungspunkt zum Messen der Umgebungsluft in der inneren Kammer des Sockels aufweist, die zum Fühlen der Temperatur des kalten Verbindungspunktes (53, 55) des ersten Thermoelementes in die spitze (36) des zweiten elektrischen Steckkontaktes eingebaut ist; und
(i) Schaltungsmittel (60, 62), die mit dem zweiten Thermoelement verbunden sind und Signalmittel (62) zur Erzeugung eines Identifikations-Signals enthalten, wenn das zweite Thermoelement eine vorbestimmte Temperatur in der Nähe des kalten Verbindungspunktes des ersten Thermoelementes abfühlt.

2. Sonde nach Anspruch 1, in der der erste elektrische Steckkontakt (14) den zweiten elektrischen Steckkontakt (10) umgibt und von diesem durch einen Ring (16) aus Isoliermaterial getrennt ist, wobei der erste Steckkontakt (14) in einem weiteren, nicht leitenden Gehäuse (12) gehaltert ist und elektrisch leitende Leiter (24, 26) sich von den Steckkontakten (10, 14) durch das weitere Gehäuse (12) hindurch erstreckten.

3. Sonde nach Anspruch 1 oder 2, in der an das erste Thermoelement (21) ein Recorder (27) angeschlossen ist, der die durch das erste Thermoelement (21) gemessene Temperatur aufzeichnet.

## Revendications

1. Lance de thermocouple destinée à être immergée dans un bain liquide, comprenant :
(a) un boîtier (46) et un support de thermocouple (22) monté dans le boîtier;
(b) une douille tubulaire (58) montée à l'intérieur du boîtier et délimitant une chambre intérieure;
(c) un premier thermocouple (21) ayant une jonction chaude (34) et une jonction froide (53,55) avec des premier et deuxième conducteurs électriques (19,18) raccordés au niveau de la jonction froide et s'en éloignant, le premier thermocouple étant supporté dans le support;
(d) des moyens de bloc (48) pour supporter le premier thermocouple à l'intérieur du boîtier, la jonction chaude du premier thermocouple dépassant hors du boîtier;
(e) la douille (58) étant supportée dans les moyens de bloc pour contenir la jonction froide du premier thermocouple (53,55) et les premier et deuxième conducteurs électriques (19,18) s'en éloignant, la jonction froide du premier thermocouple étant disposée dans une paroi de la douille tubulaire;
(f) un premier raccord électrique (14) introduit dans les moyens de douille et étant en relation de conduction électrique avec le premier conducteur (19) partant de la jonction froide du premier thermocouple (55);
(g) un deuxième raccord électrique (10) disposé à l'intérieur de la douille et introduit dans le premier raccord électrique (14) et étant connecté électriquement avec le deuxième conducteur (18) partant de la jonction froide du premier thermocouple (53), le premier raccord électrique ayant une pointe (36) qui s'étend à proximité de la jonction froide du premier thermocouple (53,55);
(h) un deuxième thermocouple (10) ayant une jonction chaude adaptée pour mesurer l'air ambiant dans la chambre intérieure de la douille installée dans la pointe (36) du deuxième raccord électrique pour mesurer la température de la jonction froide (53,55) du premier thermocouple; et
(i) des moyens de circuit (60,62) raccordés au deuxième thermocouple et comportant des moyens de signaux (62) procurant un signal identifiable lorsque le deuxième thermocouple détecte une température prédéterminée proche de la jonction froide du premier thermocouple.

2. Lance selon la revendication 1, dans laquelle le premier raccord électrique (14) entoure le deuxième raccord électrique (10) et en est séparé par un anneau (16) de matériau isolant, le premier raccord (14) étant tenu dans un autre boîtier non conducteur (12) avec des conducteurs électriques (24,26) s'étendant à travers le deuxième boîtier (12) depuis les raccords (10,14).

3. Lance selon la revendication 1 ou la revendication 2, dans laquelle un enregistreur (27) est raccordé au premier thermocouple (21), l'enregistreur enregistrant la température mesurée par le premier thermocouple (21).
